# EUROPÄISCHE PATENTSCHRIFT

(11) **EP 0 550 498 B1**
(45) Veröffentlichungstag und Bekanntmachung des Hinweises auf die Patenterteilung: **27.12.1995**
(21) Anmeldenummer: 91916306.3
(22) Anmeldetag: 20.09.1991
(51) Int. Cl.: B60S 1/34, B60S 1/40

(54) **SCHEIBENWISCHERANLAGE**
WINDSCREEN WIPER SYSTEM
SYSTEME ESSUIE-GLACE

(30) Priorität: 04.10.1990 AT 2001/90
(43) Veröffentlichungstag der Anmeldung: 14.07.1993
(60) Teilanmeldung: 94118166.1
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Hofinger, Engelbert, DDr.
(86) Internationale Anmeldenummer: AT9100103
(87) Internationale Veröffentlichungsnummer: WO9205982

(56) Entgegenhaltungen:
- WO-A-90/11209
- CA-A- 2 029 885
- FR-A- 2 490 565
- GB-A- 457 809
- GB-A- 2 155 315

## Beschreibung

Die Erfindung betrifft eine Scheibenwischeranlage für Fahrzeuge mit einer über ihre Breite gekrümmten Fahrzeugscheibe, mit mindestens einem angetriebenen Wischerarm, an dessen freiem Ende ein Wischerblatt, das um eine zum Wischerblatt parallele Längsachse schwenkbar gelagert ist, und ein von der Wischerarmbewegung abgeleiteter Schwenkantrieb für das Wischerblatt vorgesehen sind.

Insbesondere bei Personenkraftwagen weisen Windschutzscheiben eine Wölbung in ihrer Breite auf, die sich in den Seitenrandbereichen meist verstärkt. Ein über die gewölbte Scheibe schwenkender Wischerarm weist daher nur eine Stellung auf, in der das Wischerblatt senkrecht auf der Scheibe aufliegt, während sich in allen übrigen Stellungen innerhalb des Wischbereiches eine Abweichung aus der 90°-Stellung ergibt. Diese Abweichung von der Senkrechten, die auch Normalenfehler genannt wird, beeinflußt unter anderem die Reinigungsgüte, das Umlegeverhalten des Wischergummis in den Umkehrpunkten und die Aerodynamik der Wischeranlage.

Es wurde daher versucht, Scheibenwischeranlagen zur Verfügung zu stellen, in denen das Wischerblatt während der Schwenkbewegung zusätzlich verdreht wird. So ist etwa aus der GB-A 2 155 315 eine Scheibenwischeranlage der eingangs genannten Art bekannt geworden, bei der das Wischerblatt auf einem Querlenker befestigt ist, der über zwei Kugelgelenke auf dem Wischerarm und einem Parallelogrammlenker gelagert ist, wobei von der auf dem Wischerarmende fixierten Lagerkugel zwei Führungsstifte abstehen, die in eine schräge Ringnut des Querlenkers eingreifen. Aufgrund der Parallelführung und der Schrägführung in der Ringnut verdreht sich beim Schwenken des Wischerarmes der Querlenker und mit diesem das auf dem Querlenker fixierte Wischerblatt, sodaß es im wesentlichen im Auflagewinkel auf der Scheibe konstant bleibt. Von Nachteil ist, daß sich das gesamte Parallelogramm verwindet.

Die Erfindung hat es sich nun zur Aufgabe gestellt, eine Scheibenwischeranlage zu schaffen, bei der für die, die Beibehaltung des Auflagewinkels des Wischerblattes auf der Scheibe erforderliche Bewegung nur das Wischerblatt, nicht jedoch Teile der Parallelführung auf dem freien Ende des Wischerarmes verschwenkt werden.

Bei einer Wischeranlage nach dem Oberbegriff des Anspruchs 1, der jene nach der GB-A-2 155 315 gattungsgemäß ausgebildet ist wird dies erfindungsgemäß dadurch erreicht, daß das Wischerblatt schwenkbar an einem Lagerteil angeordnet ist, der um eine zum Wischerblatt parallele Längsachse schwenkbar am Tragteil angeordnet ist, und daß die Steuerkurve drehfest am freien Ende des Wischerarmes und das Abtastelement am Lagerteil vorgesehen sind.

Auf diese Weise wird zwischen dem Wischerarm und dem Wischerblatt eine Art von Kreuzgelenk ausgebildet, wobei eine üblicherweise vorhandene, senkrecht zum Wischerblatt verlaufende Schwenkachse vor oder nach bzw. ober- oder unterhalb der Längsachse liegen kann. Gegebenenfalls können die Längsachse und die Schwenkachse auch einander schneiden.

Als Parallelführung des Tragteiles ist bevorzugt ein Teil eines die Länge des Wischerarmes verändernden Stellantriebes vorgesehen, der für die Führung des Wischerblattes parallel zum unteren Scheibenrand notwendig ist.

Nachstehend werden nun Ausführungsbeispiele der Erfindung an Hand der Figuren der beiliegenden Zeichnungen näher beschrieben.

Es zeigen:
- Fig. 1: eine Draufsicht auf eine Windschutzscheibe eines Kraftfahrzeuges mit einer erfindungsgemäßen Scheibenwischeranlage,
- Fig. 2 bis 5: eine erste Ausführung, wobei Fig. 2 ein Teillängsschnitt durch die Wischerblatthalterung, Fig. 3 ein Schnitt nach der Linie III-III von Fig. 2, und die Fig. 4 und 5 Teilschnitte einer mittleren und einer rechts verschwenkten Arbeitsstel-lung sind,
- Fig. 6 und 7: eine zweite Ausführung im Teilschnitt und in Draufsicht,
- Fig. 8 und 9: eine dritte Ausführung im Teilschnitt und in Draufsicht,
- Fig. 10: eine vierte Ausführung im Teilschnitt,
- Fig. 11 und 12: eine fünfte Ausführung in mittlerer und in einer rechts verschwenkten Arbeitsstellung jeweils im Teilschnitt, und
- Fig. 13 bis 15: eine sechste Ausführung in Darstellungen ähnlich den Fig. 2,4 und 5.

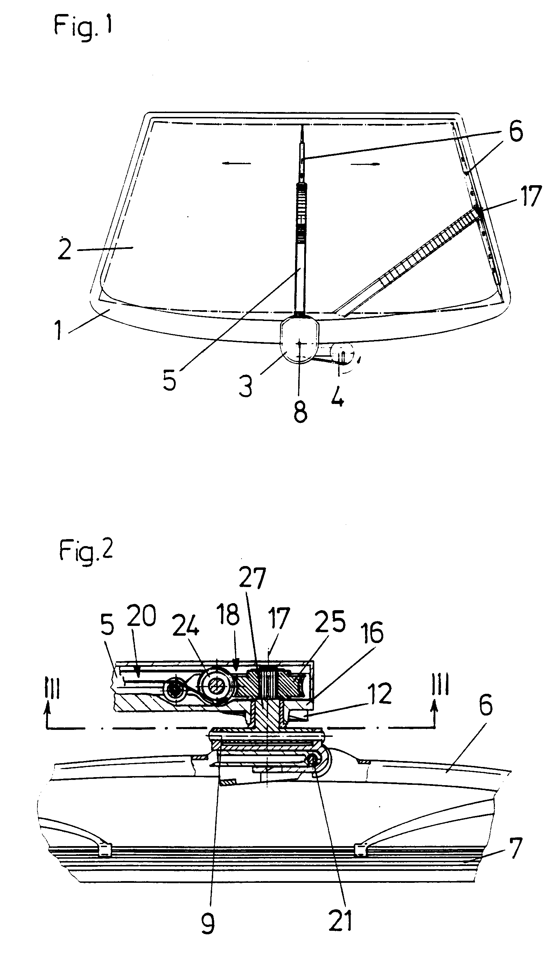

Bei erfindungsgemäßen Scheibenwischeranlagen wird der Normalenfehler, also die Abweichung des Wischerblattes vom senkrechten Auflagewinkel auf der Fahrzeugscheibe 2 verringert bzw. vermieden. Die Scheibenwischeranlagen lassen sich sowohl als einarmige als auch als doppelarmige Scheibenwischer ausbilden, die im wesentlichen parallel zum unteren Rand über die Scheibe 2 geführt werden. Unterhalb der Fahrzeugscheibe 2 ist am Fahrzeug 1 der Schwenkantrieb 3 mit Antriebsmotor 4 in bekannter Weise installiert, und der Wischerarm 5 um die Wischerarmschwenkachse 8 verschwenkbar; mehrere Positionen sind in Fig. 1 ersichtlich.

Das Wischerblatt 6 ist um eine Querachse 21 schwenkbar in einem Lagerteil 26 angeordnet, der um eine parallel zum Wischerblatt 6 sich erstreckende Längsachse 9 in einem Tragteil 27 verschwenkbar ist. Der Tragteil 27 ist am freien Ende des Wischerarmes 5 um eine zur Wischerarmschwenkachse 8 parallele Achse 17 verdrehbar. Die Verschwenkbarkeit um die zum Wischerblatt 6 parallele Längsachse 9 erlaubt die Vermeidung des Normalenfehlers, das heißt die Beibehaltung einer zur Fahrzeugscheibe 1 senkrechten Stellung des Wischerblattes 6 samt Wischergummi 7 unabhängig von der Krümmung der Scheibe und seinem Winkel zum Wischerarm 5 bzw. der Wischerarmschwenkachse 8. Zur Festlegung bzw. Führung des Wischerblattes 6 mit einem Auflagewinkel zur Scheibe 2 von etwa 90° bestehen verschiedene Möglichkeiten.

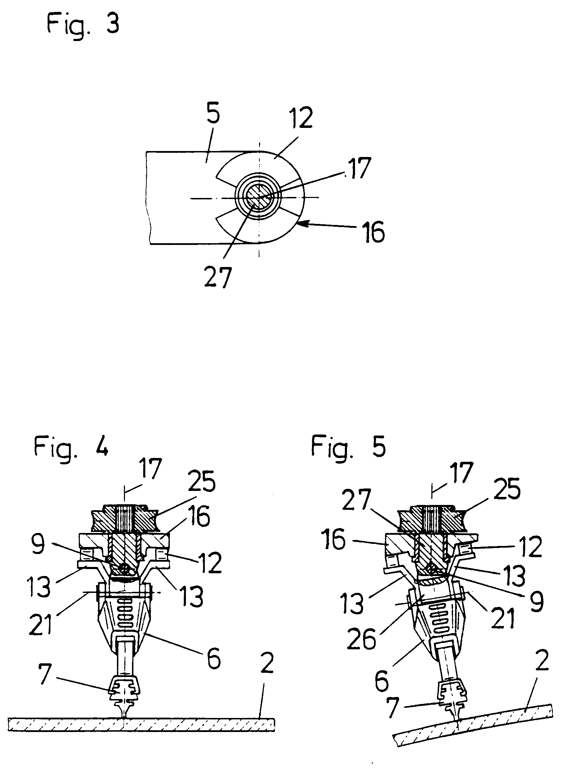

Die Fig. 2 bis 5 zeigen das freie Ende eines Wischerarmes 5, der seine Länge mit dem Schwenkwinkel verändert, um die vollflächige Überdeckung der Fahrzeugscheibe 2 zu bewirken. Ein hier nicht näher erläuterter Stellantrieb 20 in Form eines Seilzuges dient als Parallelführung 18 bei der Verdrehung des Wischerblattes 6 im freien Ende des Wischerarmes um die zur Wischerarmschwenkachse 8 parallele Achse 17. Der auch die Längenänderung des Wischerarmes 5 bewirkende Stellantrieb 20 weist eine vom Seilzug getriebene Antriebsschnecke 24 auf, die in ein auf der Achse 17 angeordnetes, den Tragteil 27 bildendes Schneckenzahnrad 25 eingreift. An der Unterseite des Wischerarmes 5 ist eine, eine Steuerkurve 12 tragende Platte 16 ausgebildet, an der ein am Lagerteil 26 des Wischerblattes 6 vorgesehenes Abtastelement 13 zwangsgeführt ist. Die zur Verdrehung des Wischerblattes 6 gegenüber dem Wischerarm 5 ohnedies erforderliche Parallelführung 18 wird somit auch zur Verschwenkung des Wischerblattes 6 um die Längsachse 9 eingesetzt (Fig. 4,5). Eine Anpassung der Steuerkurve 12 an die jeweilige Krümmung der Scheibe 2 führt zu einer exakten Beibehaltung der Normalstellung des Wischerblattes 6.

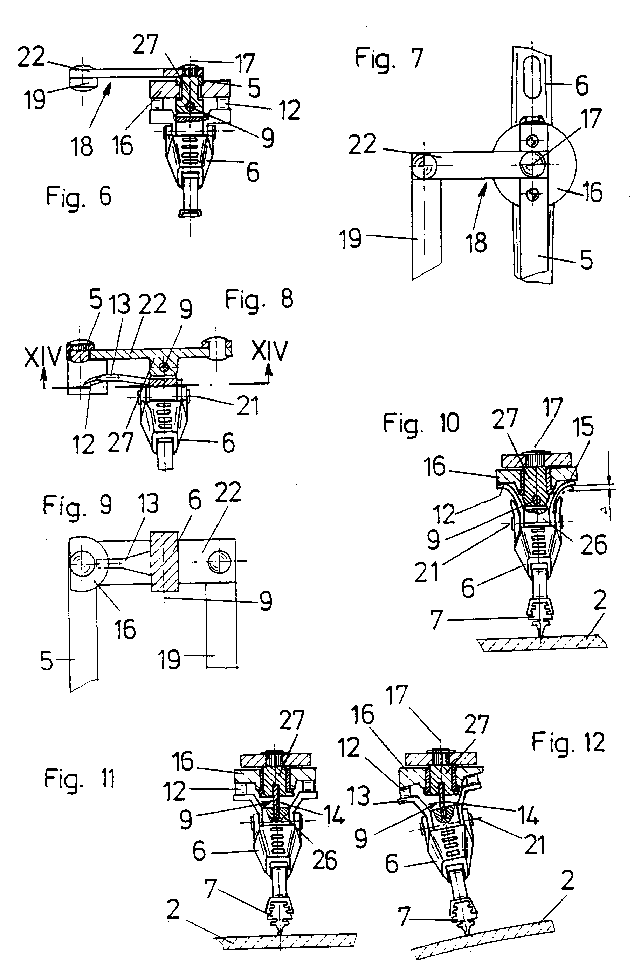

Die Ausführungen nach Fig. 6 bis 9 zeigen Varianten eines parallel geführten Wischerblattes 6. Gemäß Figur 6 und 7 wird das Wischerblatt 6 über einen Parallelogrammlenker 19 und eine Lasche 22 verdreht. In den Fig. 8 und 9 ist der um die Längsachse 9 schwenkbare Lagerteil 26 des Wischerblattes 6 an der den Tragteil 27 bildenden Lasche 22 gelagert, die den Wischerarm 5 mit dem Parallelogrammlenker 19 der Parallelführung 18 verbindet. Die Steuerkurve 12 ist am Wischerarm 5 vorgesehen und wird von dem vom Wischerblatts 6 abstehenden Abtastelement 13 abgegriffen.

Fig. 10 zeigt eine Darstellung ähnlich Fig. 4, wobei das die Steuerkurve 12 abgreifende Abtastelement 13 durch federnde Arme 15 gebildet ist, um in den Umkehrpunkten ein federndes Überschwenken des Wischerblattes 6 zu gestatten und dabei gleichzeitig das Wischerblatt 6 zu dämpfen. Dies reduziert Wischgeräusche und vermeidet das sogenannte Rattern des Wischerblattes. In der Ausführung nach den Fig. 11 und 12 ist die Längsachse 9 nicht durch einen Lagerstift, sondern durch ein Federblatt 14 gebildet, das in den Lagerteil 26 des Wischerblattes 6 und in den um die Achse 17 drehbaren Tragteil 27 eingesetzt ist.

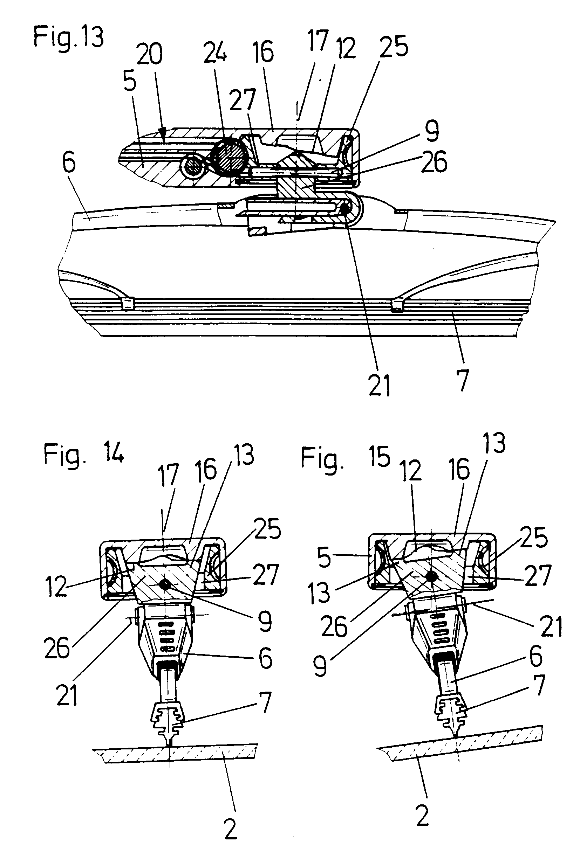

In der Ausführung nach Fig. 13 bis 15 wird über einen einen Seilzug aufweisenden Stellantrieb 20 eine Antriebsschnecke 24 angetrieben, die in das als Tragteil 27 dienende Schneckenzahnrad 25 eingreift. In diesem ist die Längsachse 9 vorgesehen, um die der Lagerteil 26 des Wischerblattes 6 schwenkbar gelagert ist. Vom Lagerteil 26 des Wischerblattes 6 stehen die Abtastelemente 13 nach oben ins Innere des Schneckenzahnrades 25 ab. Diese gleiten entlang der Steuerkurve 12, die verdrehfest an der Innenseite des Wischerarmes 5 bzw. seiner äußeren Abdeckung vorgesehen ist. Im Vergleich zu den Fig. 2 bis 5 weist diese Ausführung eine verringerte Bauhöhe auf.

In allen Ausführungen weist das Wischerblatt 6 aufgrund der senkrecht zueinander ausgerichteten Schwenkachsen 9 und 21 eine kreuzgelenkartige Aufhängung auf, die es im Zusammenwirken mit der der Fahrzeugscheibe 2 angepaßt gekrümmten Steuerkurve 12 ermöglicht, den Auflagewinkel des Wischerblattes 6 auf der Scheibe 2 während der gesamten Wischerarmbewegung zumindest im wesentlichen konstant zu halten. Der Winkel zwischen dem Wischerblatt 6 und dem Wischerarm 5 ist dabei ohne Bedeutung.

## Patentansprüche

1. Scheibenwischeranlage für Fahrzeuge mit einer über ihre Breite gekrümmten Fahrzeugscheibe (2), mit mindestens einem angetriebenen Wischerarm (5), an dessen freiem Ende ein um eine zur Wischerarmschwenkachse (8) parallele Achse (17) drehbarer Tragteil (27) vorgesehen ist, mit einem am Tragteil (27) angeordneten Wischerblatt (6), das in der Position zum Wischerarm (5) veränderbar ist, und mit einem über eine Parallelführung (18) vom Wischerarmantrieb abgeleiteten Antrieb für das Wischerblatt (6), der eine Steuerkurve (12) und ein während der Bewegung des Wischerarmes (5) entlang der Steuerkurve (12) geführtes Abtastelement (13) umfaßt, dadurch gekennzeichnet, daß das Wischerblatt (6) schwenkbar an einem Lagerteil (26) angeordnet ist, der um eine zum Wischerblatt (6) parallele Längsachse (9) schwenkbar am Tragteil (27) angeordnet ist, und daß die Steuerkurve (12) drehfest am freien Ende des Wischerarmes (5) und das Abtastelement (13) am Lagerteil (26) vorgesehen sind.

2. Scheibenwischeranlage nach Anspruch 1, dadurch gekennzeichnet, daß in den Tragteil (27) und den Lagerteil (26) ein Federblatt (14) eingesetzt ist, dessen biegbarer Mittelbereich die Längsachse (9) enthält.

3. Scheibenwischeranlage nach Anspruch 1 oder 2, dadurch gekennzeichnet, daß das Abtastelement (13) zwei federnde Arme (15) aufweist.

4. Scheibenwischeranlage nach einem der Ansprüche 1 bis 3, dadurch gekennzeichnet, daß als Parallelführung (18) des Tragteiles (27) ein Teil eines die Länge des Wischerarmes (5) verändernden Stellantriebes (20) vorgesehen ist.

5. Scheibenwischeranlage nach Anspruch 1 und 4, dadurch gekennzeichnet, daß der drehbar gelagerte Tragteil (27) durch ein Zahnrad (25) des Stellantriebes (20) gebildet ist.

## Claims

1. Windshield wiper system for vehicles with a windshield (2) which is curved across its width, comprising at least one driven wiper arm (5) on whose free end there is provided a supporting part (27) rotatable about a shaft (17) which is parallel to the wiper arm oscillatory axis (8), comprising a wiper blade (6) arranged at the supporting part (27) and its position relative to the wiper arm (5) being adjustable, and comprising for the wiper blade (6) a drive derived from the wiper arm drive via a parallel guide (18) and having a control cam (12) and a cam follower (13) guided along the control cam (12) during the movement of the wiper arm (5), characterized in that the wiper blade (6) is pivotally arranged at a mounting part (26) which is arranged pivotally at the supporting part (27) about a longitudinal axis (9) which is parallel to the wiper blade (6), and that the control arm (12) is non-pivotally arranged at the free end of the wiper arm (5) and the cam follower (13) at the mounting part (26).

2. Windshield wiper system as claimed in claim 1, characterized in that a spring leaf (14) comprising in its flexible center region the longitudinal axis (9) is inserted into the supporting part (27) and into the mounting part (26).

3. Windshield wiper system as claimed in claim 1 or 2, characterized in that the cam follower (13) has two springy arms (15).

4. Windshield wiper system as claimed in one of claims 1 to 3, characterized in that a part of a control drive (20) altering the length of the wiper arm (5) is formed as a parallel guide (18) for the supporting part (27).

5. Windshield wiper system as claimed in claims 1 and 4, characterized in that the pivotally mounted supporting part (27) is formed by a worm gear (25) of the control drive (20).

## Revendications

1. Système d'essuie-glace pour véhicules avec une glace de véhicule (2) courbée sur sa largeur, avec au moins un bras (5) d'essuie-glace entraîné, à l'extrémité libre duquel est prévue une pièce porteuse (27) pouvant pivoter autour d'un axe (17) parallèle à l'axe de pivotement (8) du bras d'essuie-glace, avec une raclette (6) montée sur la pièce porteuse (27) et dont on peut faire varier la position par rapport au bras (5) d'essuie-glace, et avec un entraînement de la raclette (6) dérivé de l'entraînement du bras d'essuie-glace par l'intermédiaire d'un guidage parallèle (18), et comprenant une came (12) et un élément palpeur (13) guidé le long de la came (12) pendant le mouvement du bras (5) d'essuie-glace, caractérisé en ce que la raclette (6) est montée en pouvant pivoter sur une pièce-palier (26) montée (elle-même) sur la pièce porteuse (27) en pouvant pivoter autour d'un axe longitudinal (9) parallèle à la raclette (6), et en ce que la came (12) est prévue solidaire en rotation à l'extrémité libre du bras (5) d'essuie-glace et que l'élément palpeur (13) est prévu sur la pièce-palier (26).

2. Système d'essuie-glace selon la revendication 1, caractérisé en ce qu'une lame de ressort (14), dont la zone centrale flexible contient l'axe longitudinal (9), est insérée dans la pièce porteuse (27) et la pièce-palier (26).

3. Système d'essuie-glace selon la revendication 1 ou 2, caractérisé en ce que l'élément palpeur (13) présente deux bras élastiques (15).

4. Système d'essuie-glace selon l'une des revendications 1 à 3, caractérisé en ce qu'il est prévu comme guidage parallèle (18) de la pièce porteuse (27) une pièce d'un actionneur (20) modifiant la longueur du bras (5) d'essuie-glace.

5. Système d'essuie-glace selon l'une des revendications 1 à 4, caractérisé en ce que la pièce porteuse (27) montée avec posssibilité de rotation est formée par une roue dentée (25) de l'actionneur (20).
